# EUROPEAN PATENT APPLICATION

(11) **EP 1 903 830 A1**
(43) Date of publication of application: **26.03.2008**
(21) Application number: 08000019.3
(22) Date of filing: 01.11.2000
(51) Int. Cl.: H04Q 7/38, H04L 29/06

(54) **Cellular data system security method**

(30) Priority: 01.11.1999 US 162987 P; 24.02.2000 US 184793 P
(62) Divisional of application: 00971633.3
(71) Applicant: White. Cell, Inc., 48092 Rosh-HaAyin (IL); Amitai-Oreny, Dganit, 69371 Tel-Aviv (IL)
(72) Inventor: Amitai-Oreny, Dganit, 69371 Tel-Aviv (IL)
(74) Representative: Cramphorn, Conrad

(57) **Abstract**

A method of providing security to a subscriber's mobile cellular equipment (105) coupled to a cellular data network (102), the method comprising the steps of: (a) defining filter rules (201) and (b) monitoring cellular data traffic for data corresponding to one or more filter rules (202).

## Description

### Field of the Invention

The invention relates generally to security in cellular data systems, and more specifically to providing a security method and apparatus to protect digital data and equipment in cellular data networks such as those providing cellular Internet access.

### Claim of Priority

This application is related to and claims priority from pending provisional application 60/162,987, "Controlled & Safe Data Services for Real Time Devices", filed 11/01/99, and application 60/184,793, "Data System Security Method and Apparatus", filed 2/24/2000.

### Background of the Invention

Cellular telephones and wireless computerized cellular devices are rapidly evolving to incorporate capabilities traditionally found only on large networked computers, and are frequently used to access the Internet or other networks. Current generations of such devices have limited but expanding capabilities, and often incorporate versions of web browsers, e-mail clients, and other common Internet data retrieval tools.

It is anticipated that as the capabilities of these cellular data devices grow, they will become favored for some types of Internet use that are well-suited to mobile or time-sensitive applications, such as receiving e-mail or other urgent messages, trading stocks, looking up data such as maps or movie times and listings while away from home, and other such uses. Still other uses are expected to evolve as this technology develops, possibly including new e-commerce, multimedia, or additional data retrieval and messaging applications.

A number of competing protocols such as WAP (Wireless Application Protocol) and others have been developed to facilitate exchange of data between cellular networks and mobile cellular equipment, most of which are used to facilitate Internet access via the mobile equipment and the cellular network system. These cellular network systems typically both receive data from the Internet or another information source and convert it to data encoded with the appropriate protocol for sending to the mobile cellular equipment, and receive data from the mobile cellular equipment and convert it for sending over the Internet or other destination. Therefore, mobile cellular equipment can communicate via a supported protocol through the cellular network system to the Internet or other information source, using services provided by the cellular network system.

But, it is also anticipated that as cellular mobile equipment with such capability becomes more common, so too will the plague of viruses, spam, trojan horse application, flood attacks, and other malicious data currently propagated over networks such as the Internet. In the Internet context, firewalls and virus scanning software have evolved to challenge many such types of malicious data. Unfortunately, simple virus scanners or firewalls are not easily or effectively adaptable to a cellular network or to mobile cellular equipment, and so the threat of malicious or undesired data is largely yet unsolved. Further, some threats such as flooding are not addressable using other methods such as encryption, and other solutions similarly often fail to address a wide variety of likely potential threats.

Current cellular data security systems typically provide only encryption or authentication, and the security provided by these systems has recently been questioned. Even if secure, hostile or undesired data from the Internet or another source may be unknowingly retrieved despite implementation of these systems without any way of detecting its nature until the data has done harm. Security problems therefore still exist in a variety of environments and applications, and mobile cellular equipment largely remains susceptible to attack from hackers, viruses, and other hostile or undesired data. <page 2a>

PCT Publication Number W09847270 entitled "Data Service in a Mobile Communications Network" relates to a server of a telecommunications system that comprises first means for connecting to a mobile communications system which in turn connects to terminals on a radio connection, and a second means for connecting to another telecommunications system of the Internet type. According to the invention, the server is further arranged to receive commands from the terminals and to convert them into a format compatible with at least one of the protocols of the other telecommunications system; and to receive information from the direction of the other telecommunications system and to convert it into a format compatible with at least one protocol of the mobile communications system.

European Patent Application Number EP 0909073 entitled "Methods and apparatus for a computer network firewall with proxy reflection" relates to improved computer network firewalls which include one or more features for increased processing efficiency. A firewall in accordance with the invention can support multiple security policies, multiple users or both, by applying any one of several distinct sets of access rules. The firewall can also be configured to utilize "stateful" packet filtering which involves caching rule processing results for one or more packets, and then utilizing the cached results to bypass rule processing for subsequent similar packets. To facilitate passage to a user, by a firewall, of a separate later transmission which is properly in response to an original transmission, a dependency mask can be set based on session data items such as source host address, destination host address, and type of service. The mask can be used to query a cache of active sessions being processed by the firewall, such that a rule can be selected based on the number of sessions that satisfy the query. Dynamic rules may be used in addition to pre-loaded access rules in order to simplify rule processing. To unburden the firewall of application proxies, the firewall can be enabled to redirect a network session to a separate server for processing.

What is needed is a system providing security in a cellular data system that can monitor and restrict undesired or malicious data.

### Summary of the Invention

The present direction is particularly directed to a method of providing security to a subscriber's mobile cellular equipment coupled to a cellular data network, the method comprising the steps of: (a) defining filter rules and (b) monitoring cellular data traffic for data corresponding to one or more filter rules.

Typically the method further comprises the step (c) of restricting undesired data.

In some embodiments, the filter rules comprise rules configurable by a subscriber via operation of the subscriber's cellular mobile equipment.

The rules may be defined by at least one of the group comprising: (i) mobile cellular equipment users; (ii) cellular service providers; (iii) an automated cellular data monitoring system; (iv) a filter rule subscription service, and (v) a filter rule distribution service.

In typical embodiments, the cellular data traffic comprises text messages selected from the list of emails, SMS and urgent messages.

Optionally, the monitoring and restricting occurs in an event monitor that is operable to limit the function of software executing on the cellular mobile equipment by use of the filter rules.

Optionally, step (c) of restricting undesired data comprises at least one of the group comprising: (i) restricting transmission of undesired data, and (ii) restricting processing of undesired data.

In some applications, the term undesired data relates to data selectable from the group comprising duplicate data and malicious data.

In typical embodiments, the filtering rules are implemented via at least one of the group comprising: (i) state machines; (ii) defined key fields corresponding to the fields in the cellular data; (iii) location specific restrictions on content or quantity of information.

Preferably the filtering rules comprise at least one rule using the location of the mobile cellular equipment as a parameter.

Optionally, the filtering rules are applied within or between cellular data networks, mobile cellular equipment or external network equipment.

In some processes, additional method steps are included. For example, a step (d) of alerting the user may be included.

Additionally or alternatively, the step of tracking messages delivered to the subscriber's mobile cellular equipment for creating a report selected from the list of billing reports and log reports may be included.

Optionally and alternatively, the method comprises an additional step of forwarding the data.

### Brief Description of the Figures

Figure 1 shows a cellular data network connected to an external network with mobile cellular equipment, as may be used to practice an embodiment of the present invention.
Figure 2 is a diagram illustrating elements of one example embodiment of the present invention.
Figure 3 is a diagram illustrating elements of an embodiment of the present invention incorporating message delivery tracking capability.
Figure 4 is a diagram illustrating an embodiment of the present invention incorporating operation supporting filtering data in a non-protocol specific format.

### Detailed Description

In the following detailed description of sample embodiments of the invention, reference is made to the accompanying drawings which form a part hereof, and in which is shown by way of illustration specific sample embodiments in which the invention may be practiced. These embodiments are described in sufficient detail to enable those skilled in the art to practice the invention, and it is to be understood that other embodiments may be utilized and that logical, mechanical, electrical, and other changes may be made without departing from the spirit or scope of the present invention. The following detailed description is, therefore, not to be taken in a limiting sense, and the scope of the invention is defined only by the appended claims.

The present invention provides a system providing security in a cellular data system that can monitor and restrict undesired or malicious data. The system provides in various embodiments use of one or more defined filter rules to identify data that is undesired or duplicate data. The system then monitors cellular data traffic for data corresponding to one or more of the filter rules, and restricts in various embodiments of the invention transmission or use of cellular data found to correspond to one or more of the filter rules.

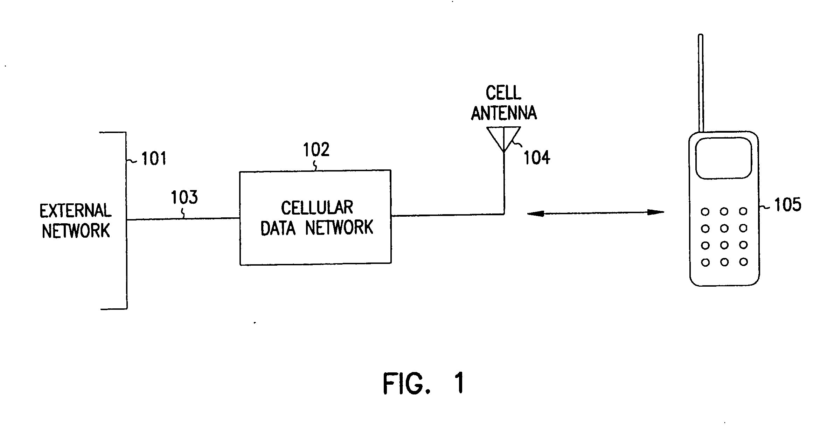

Figure 1 is a block diagram that illustrates one possible structure into which a system to practice the present invention may be incorporated. An external network 101 such as the Internet or an external telephone network is connected via a connection 103 to a local cellular data network 102 that is operated by a cellular service provider. Each cell within the service provider's service region employs one or more antennas 104 to facilitate wireless communication with subscriber's mobile cellular equipment 105.

In operation, a system incorporating the present invention may be implemented within the external network 101 before connection via 103 to the local cellular data network 102, within the cellular data network 102, or within the mobile cellular equipment 105. In practice, the invention may therefore be incorporated anywhere within the data chain between the mobile cellular equipment and other originators of cellular data, including within the cellular data networks, mobile cellular equipment, or other equipment of other network service providers or cellular service providers.

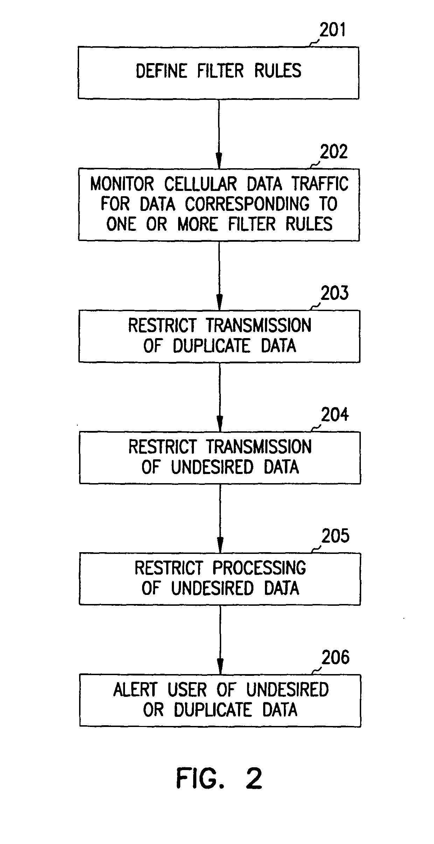

One exemplary embodiment of the invention presented in Figure 2 first requires definition of filter rules at 201. The filter rules are defined to serve as a reference with which to determine what cellular data traffic will be deemed undesired or duplicate data. The filter rules may in various embodiments of the invention be defined by mobile cellular equipment users, by cellular service providers, by an automated cellular data monitoring system, by a filter rule subscription or distribution service, or by any other method of creating filter rules usable to identify undesired or duplicate data.

The filter rules may be implemented in any way that facilitates examination of cellular data traffic for corresponding data, including in various embodiments of the invention implementation via state machines, defined key fields corresponding to fields in the cellular data stream, location-specific restrictions on content or quantity of information, or any other suitable method. The filter rules will in various embodiments be defined to enable identification of duplicate or undesired data, and may include rules that use the location of mobile cellular equipment as a parameter.

The filter rules defined at 201 may in some embodiments of the invention be automatically propagated through a network, including within or between cellular data networks, mobile cellular equipment, and external network equipment. In other embodiments, the filter rules may be optionally received from a distribution source, or received automatically but requiring user approval before utilization.

The filter rules will in various embodiments of the invention be configured to define duplicate key fields in cellular data, such that these key fields can be used to monitor cellular data traffic at 202 to determine whether cellular data is duplicate data. In one specific embodiment of the invention, this is accomplished by building a table comprising a table entry for each address detected in monitoring cellular data. Each table entry then records both the time of the last detected cellular data corresponding to the address, and a counter that counts the duplicate cellular data corresponding to the address over a period of time. Such a system can monitor both source and destination addresses, thereby preventing both floods to a single destination from multiple sources and floods or spam from a single source to multiple other destinations.

Duplicate data includes not only data that is determined to have the same address as other data, but in other embodiments includes having the same data in one or more other fields. For example, data from a single network domain that contains the same data as other cellular data traffic may be deemed duplicate despite being from a different address. Many other key fields or combinations of key fields may be used in different embodiments of the invention to determine duplication of data, and are within the scope of the invention.

Data determined to be duplicate data is then restricted from transmission at 203, and a user is optionally alerted in some embodiments of the invention at 206. The user may be a mobile equipment user, a cellular data network equipment user or cellular service provider, or be an external network user. The user will in some further embodiments be able to inspect and discard or forward the data, log the data, create new filter rules in response to the data, or take other appropriate action in response to the alert.

Restricting transmission of the data at 203 in further embodiments comprises delaying transmission of duplicate data that exceeds a predetermined allowable amount of duplicate cellular data per period of time. Restricting transmission in various other embodiments may comprise storing the duplicate data for later evaluation, reporting of the duplicate data to a cellular service provider for transmission approval, possible approval and logging of duplicate data to enable billing for authorized mass advertising, or other means of restriction.

The filter rules defined at 201 may also address other types of data that are unwanted, such that the filter rules are used at 202 in monitoring cellular data traffic for the udesired data corresponding to the one or more filter rules. This undesired data can be restricted from further transmission at 204 such as when detected in a cellular data network of a cellular service provider, or can be restricted from processing at 205 such as when detected in mobile cellular equipment.

One or more filter rules corresponding to the undesired data type have been defined at 201, and again may address a variety of undesired data types using any variety of rule parameters. For example, the filter rules may be address-specific, user-configurable, or simply mass distributed rules directed toward known threats. The undesired data types include in various embodiments but are not limited to known viruses, trojan horses, spam, data originating from addresses or network regions known or suspected to be associated with hacking activity, undesired advertising or personal addresses, data of a size larger than is desired for automatic downloading, or other undesirable data.

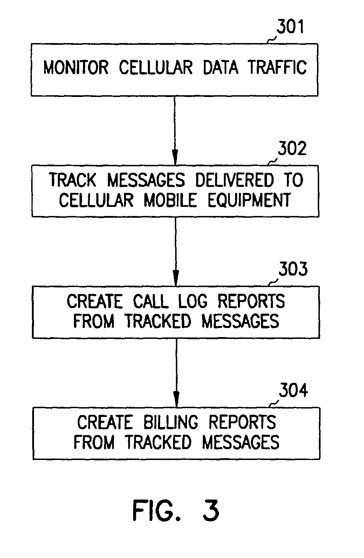

In some embodiments of the invention, the system implementing the monitoring function at 202 is further operable to track messages delivered to cellular mobile equipment. Figure 3 is a flowchart that illustrates integration of tracking functions into a system that monitors cellular data traffic as shown at 202 and at 301. Messages delivered to mobile cellular equipment are tracked at 302, and the tracking data is used to create call log reports from tracked messages at 303. The tracking data is also used in a further embodiment to create billing reports or to create billing data at 304. The billing can be based on tracking data comprising the number of messages or other data elements delivered, the bandwidth consumed in receiving data, the speed or other level of service with which data is retrieved, or other such factors.

The mobile cellular equipment address or other identifying characteristics may be filtered via the filter rules to prevent propagation of selected mobile cellular equipment identifiers or cell identifiers from propagating through a cellular or external network, preventing transmission of data that could be used to locate the cellular mobile equipment. This restriction of cellular mobile equipment registration data propagation is implemented in selected embodiments of the invention to protect user privacy, so that the registration or address data cannot be intercepted and used to determine in which cell a particular mobile cellular equipment user is located.

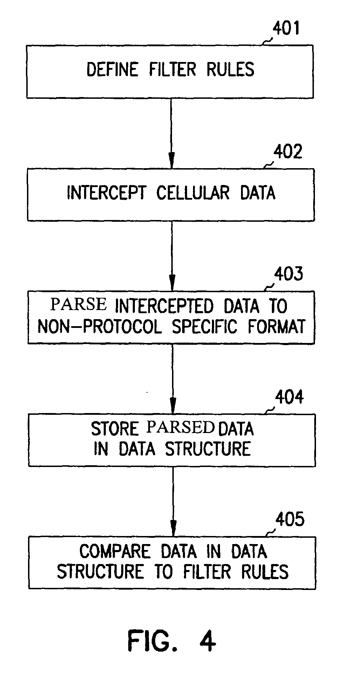

The inventive system described herein may be implemented within a system utilizing multiple data streams that are encoded with multiple cellular data protocols, and desirably will have monitoring capability to monitor cellular data traffic in any protocol supported within the network. Examples of such protocols include WAP, GPRS, SMS, CIMD, NIP, OIS and TCP/IP protocols such as SMPP and UCP. Other protocols exist and are likely to be developed, and the protocols here are listed as examples only. In such systems, it is desirable to monitor cellular data traffic as shown at 202 in a manner such as is illustrated in Figure 4. At 401, filter rules are defined in a non-format specific format. Cellular data is intercepted within the system at 402, and the intercepted data is parsed into a non-protocol specific format at 403. The parsed data is stored in a data structure in non-protocol specific format at 404, and the data is then compared against the filter rules at 405. Elements 402 through 405 largely correspond to monitoring cellular data at 202 of Figure 2, and comprise yet another possible embodiment of the invention as described in conjunction with Figure 4.

The present invention may also be implemented in some embodiments within mobile cellular equipment 105. Various embodiments will employ an event monitor operating in hardware or software within mobile cellular equipment that is operable to limit the function of software that executes on the mobile cellular equipment. The restrictions to software function include in some embodiments limiting the ability of executing software to erase or modify data stored on the mobile cellular equipment. Embodiments of the invention implemented within mobile cellular equipment will likely be particularly well-suited for implementation of user-configurable filter rules, so that a user can control the degree of security and functionality of his own mobile cellular equipment. But, filter rules may still in various embodiments be received from a distribution server or via other methods, such as to receive automatic virus or trojan horse filter rule updates.

A Subscriber Identity Module (SIM) is employed in some moblie cellular equipment such as is shown at 105, and filter rules may specifically be employed to prevent unauthorized modification of data contained in the SIM. The monitoring and restricting functions of the present invention may be employed in various embodiments within the SIM, in an interface between the SIM and the mobile cellular equipment, or within the mobile cellular equipment.

In cellular mobile equipment as well as in other embodiments of the invention, various actions may be taken once duplicate or undesired data is identified. In addition to restricting transmission or processing of the data, some embodiments of the invention will incorporate prompting a user to determine appropriate action. For example, a cellular mobile equipment user may be given the option to halt execution of suspect code, or may select to execute the code despite the warning. In other embodiments, a cellular data network or other network operator may receive notification of undesired or duplicate data, and therefore may use the data to alert people of the threat or take actions to eliminate the undesired or duplicate data. A help desk may also be alerted in some embodiments of the invention, and may contact appropriate cellular equipment users to assist them in dealing with the undesired or duplicate data.

Implementation of the invention in some embodiments will require communication of cellular data traffic over an external network via a protocol such as TCP/IP that may not include certain address or identification information normally communicated within a cellular data network such as 102. In such embodiments, dynamic IP translation will desirably be implemented to map a certain address, phone number, or other location identifier to a TCP/IP address or other external network address, to facilitate tracking of this data and filtering based on this data. For example, a mobile cellular equipment user may configure his equipment to reject cellular data traffic from a specific telephone number. If this undesired data originates remotely from the local cellular data network and must travel to the local network via an external network using TCP/IP or another protocol that does not directly preserve and transmit the originator's phone number, dynamic IP or address translation will be needed to preserve and identify the originator's phone number. By associating the originator's phone number with the address used in the external TCP/IP network, the phone number can be reassociated with the cellular data with the specific IP address on reaching the local cellular data network, and so may be used there for filtering.

The present invention may be implemented in hardware, in software, or in any other manner consistent with the appended claims. It is anticipated that the examples given herein are descriptive of currently desirable applications of the invention, but it is also anticipated that many other example embodiments of the present invention will become apparent only as mobile cellular equipment and its use for data access evolve.

Although specific embodiments have been illustrated and described herein, it will be appreciated by those of ordinary skill in the art that any arrangement which is calculated to achieve the same purpose may be substituted for the specific embodiments shown. This application is intended to cover any adaptations or variations of the invention. It is intended that this invention be limited only by the claims, and the full scope of equivalents thereof.

In a first aspect, the technology described in the present invention relates to a method of providing security in a cellular data system, comprising defining one or more filter rules, at least one of the filter rules to be used to identify cellular data that is duplicate data; monitoring cellular data traffic for data corresponding to one or more of the filter rules; and restricting transmission of the cellular data traffic corresponding to the one or more filter rules.

Optionally the at least one filter rule is used to identify duplicate key fields in the cellular data, the key fields comprising a source address of an originator of the cellular data.

Optionally the method further comprising building a table comprising a table entry for each address detected in the cellular data, each table entry comprising: a timestamp of the last cellular data sent to or from the address corresponding to the table entry; and a counter that counts duplicate cellular data corresponding to the table entry per period of time.

Preferably each table entry comprises key fields to be used to identify the cellular data as duplicate.

Optionally restricting transmission of the cellular data traffic corresponding to the one or more filter rules comprises blocking duplicate cellular data that exceeds a predetermined allowable amount of duplicate cellular data per period of time from transmission.

Alternatively restricting transmission of the cellular data traffic corresponding to the one or more filter rules comprises delaying transmission of duplicate cellular data that exceeds a predetermined allowable amount of duplicate cellular data per period of time.

Optionally, the networked computerized system further tracks messages delivered through a cellular data network to cellular mobile equipment.

Optionally, the method further comprises creating billing reports from the tracked messages.

Optionally, the method further comprises creating call log reports from the tracked messages.

Optionally, the networked computerized system resides between a computer data network and a cellular data network.

Alternatively, the networked computerized system resides within a cellular data network.

Optionally the networked computerized system marks data that has been monitored via the filter rules in the networked computer to indicate monitoring.

Optionally, the cellular data traffic comprises multiple data streams encoded via multiple cellular data protocols.

Optionally, monitoring cellular data traffic comprises: intercepting cellular data; parsing the intercepted data to a data structure that is non-protocol specific; and comparing the intercepted data in the data structure against filter rules.

Optionally, the cellular data comprises mobile equipment cell registration data that is restricted via filter rules to prevent network transmission of the location of cellular mobile equipment.

A second aspect of the technology described in this application is directed to providing a method of providing security in a cellular data system, comprising defining one or more filter rules, each filter rule corresponding to an undesired data type; monitoring cellular data traffic for data corresponding to one or more of the filter rules in cellular mobile equipment; and restricting processing of the cellular data traffic corresponding to the one or more filter rules in the cellular mobile equipment.

Optionally, the monitoring and restricting occurs in an event monitor, the event monitor operable to limit the function of software executing on the cellular mobile equipment by use of the filter rules.

Optionally, limiting the function of software executing on the mobile equipment comprises limiting the ability of executing software to erase or modify data stored on the cellular mobile equipment.

Optionally, the filter rules comprise rules that can be configured by a user via operation of the cellular mobile equipment.

Optionlly, the filter rules comprise rules that are distributed via a server.

Optionally, monitoring cellular data traffic comprises: intercepting cellular data; parsing the intercepted data to a data structure that is non-protocol specific; and comparing the intercepted data in the data structure against filter rules.

Optionally, restricting processing of data that corresponds to one or more filter rules comprises temporarily halting processing of the data and prompting a cellular system user to determine what action to take.

Optionally, restricting processing of data that corresponds to one or more filter rules comprises temporarily halting processing of the data and alerting a user.

Optionally, the monitoring and restricting processing of data that corresponds to one or more filter rules occurs in an interface that resides between a subscriber identity module (SIM) and cellular mobile equipment.

Optionally, the one or more filter rules restrict modification of data contained in the subscriber identity module (SIM).

A third aspect of the technology of the present invention relates to a computerized information management system, the system operable to: store one or more filter rules, at least one of the filter rules to be used to identify cellular data that is duplicate data; monitor cellular data traffic for data corresponding to one or more of the filter rules; and restrict transmission of the cellular data traffic corresponding to the one or more filter rules.

Optionally, the at least one filter rule is usable to identify duplicate key fields in the cellular data, the key fields comprising a source address of an originator of the cellular data.

Optionally, the computerized information management system further comprises a table that comprises a table entry for each address detected in the cellular data, each table entry comprising: a timestamp of the last cellular data sent to or from the address corresponding to the table entry; and a counter that counts duplicate cellular data corresponding to the table entry per period of time.

Optionally, each table entry further comprises key fields to be used to identify the cellular data as duplicate.

Optionally, restricting transmission of the cellular data traffic corresponding to the one or more filter rules comprises blocking duplicate cellular data that exceeds a predetermined allowable amount of duplicate cellular data per period of time from transmission.

Optionally, restricting transmission of the cellular data traffic corresponding to the one or more filter rules comprises delaying transmission of duplicate cellular data that exceeds a predetermined allowable amount of duplicate cellular data per period of time.

A fourth aspect of the technology described in this specification relates to a networked computerized information management system comprising part of a cellular data network, the system operable to: define one or more filter rules, each filter rule corresponding to an undesired data type; monitor cellular data traffic for data corresponding to one or more of the filter rules; and restrict transmission of the cellular data traffic corresponding to the one or more filter rules.

Optionally, the computerized information management system is further operable to track messages delivered through a cellular data network to cellular mobile equipment.

Optionally, the computerized information management system is further operable to create billing reports from the tracked message data.

Optionally, the computerized information management system is further operable to create call log reports from the tracked message data.

Optionally, the computerized information management system resides between a computer data network and a cellular data network.

Alternatively, the computerized information management system resides within a cellular data network.

Optionally the computerized information management system is further operable to mark data that has been monitored via the filter rules in the system to indicate monitoring.

Optionally the computerized information management system is further characterized by the cellular data traffic comprising multiple data streams encoded via multiple cellular data protocols.

Optionally the computerized information management system is characterized by monitoring cellular data traffic comprising: intercepting cellular data; parsing the intercepted data to a data structure that is non- protocol specific; and comparing the intercepted data in the data structure against filter rules.

Optionally the computerized information management system is characterized by the cellular data comprising mobile equipment cell registration data that is restricted via filter rules to prevent network transmission of the location of cellular mobile equipment.

A fifth aspect of the technology described in this specification relates to cellular mobile equipment. The cellular mobile equipment is operable to: (i) store one or more filter rules, each filter rule corresponding to an undesired data type; (ii) monitor cellular data traffic for data corresponding to one or more of the filter rules; and (iii) restrict processing of the cellular data traffic corresponding to the one or more filter rules.

Optionally, the cellular mobile equipment is further characterized by the monitoring and restricting occuring in an event monitor module within the cellular mobile equipment, the event monitor operable to limit the function of software executing on the cellular mobile equipment by use of the filter rules.

Optionally, the cellular mobile equipment is further characterized by limiting the function of software executing on the mobile equipment comprising limiting the ability of executing software to erase or modify data stored on the cellular mobile equipment.

Optionally, the cellular mobile equipment is further characterized by the filter rules comprising rules that can be configured by a user via operation of the cellular mobile equipment.

Optionally, the cellular mobile equipment is further characterized by the filter rules comprising rules that are distributed via a server.

Optionally, the cellular mobile equipment is further characterized by the step of monitoring cellular data traffic comprising intercepting cellular data; parsing the intercepted data to a data structure that is non-protocol specific; and comparing the intercepted data in the data structure against filter rules.

Optionally, the cellular mobile equipment is further characterized by the step of restricting processing of data that corresponds to one or more filter rules comprising temporarily halting processing of the data and prompting a cellular system user to determine what action to take.

Optionally, the cellular mobile equipment is further characterized by the step of restricting processing of data that corresponds to one or more filter rules comprising temporarily halting processing of the data and alerting a user.

Optionally, the cellular mobile equipment is further characterized by the step of monitoring cellular data traffic and restricting processing of data that corresponds to one or more filter rules occurs in an interface comprising a part of the cellular mobile equipment that resides between a subscriber identity module (SIM) and cellular mobile equipment.

Optionally, the cellular mobile equipment is further characterized by one or more filter rules restricting modification of data contained in the subscriber identity module (SIM).

A sixth aspect of the technology described in this specification relates to a cellular mobile equipment hardware interface that is insertable between a subscriber identity module (SIM) and cellular mobile equipment and is operable when so inserted to: monitor cellular data traffic for data corresponding to one or more filter rules; and restrict processing of the cellular data traffic corresponding to the one or more filter rules.

A seventh aspect of the technology described within the present invention relates to a machine-readable medium with instructions stored thereon, such that the instructions when executed are operable to cause a computerized system to: store one or more filter rules, at least one of the filter rules to be used to identify cellular data that is duplicate data; monitor cellular data traffic for data corresponding to one or more of the filter rules; and restrict transmission of the cellular data traffic corresponding to the one or more filter rules.

Optionally, at least one filter rule is used to identify duplicate key fields in the cellular data, the key fields comprising a source address of an originator of the cellular data.

Optionally, when executed, the instructions are further operable to cause the computerized system to build a table comprising a table entry for each address detected in the cellular data, each table entry comprising: a timestamp of the last cellular data sent to or from the destination address corresponding to the table entry; and a counter that counts duplicate cellular data corresponding to the table entry per period of time.

Optionally, the machine-readable medium with instructions stored thereon, is further characterized by each table entry comprising key fields to be used to identify the cellular data as duplicate.

Optionally, the machine-readable medium with instructions stored thereon, is further characterized by being operable to restrict transmission of the cellular data traffic corresponding to the one or more filter rules by blocking duplicate cellular data that exceeds a predetermined allowable amount of duplicate cellular data per period of time from transmission.

Optionally, the machine-readable medium with instructions stored thereon is further characterized by being operable to restrict transmission of the cellular data traffic corresponding to the one or more filter rules by delaying transmission of duplicate cellular data that exceeds a predetermined allowable amount of duplicate cellular data per period of time.

Optionally, the machine-readable medium with instructions stored thereon, is further characterized by the instructions when executed being operable to cause a networked computerized system comprising part of a cellular data network to: store one or more filter rules, each filter rule corresponding to an undesired data type; monitor cellular data traffic for data corresponding to one or more of the filter rules in a networked computer comprising part of a cellular data network; and restrict transmission of the cellular data traffic corresponding to the one or more filter rules in the networked computer.

Optionally, the machine-readable medium with instructions stored thereon, is further characterized by the instructions when executed being further operable to track messages delivered through a cellular data network to cellular mobile equipment.

Optionally, the machine-readable medium with instructions stored thereon, is further characterized by the instructions, when executed, being further operable to create billing reports from the tracked messages.

Optionally, the machine-readable medium with instructions stored thereon, is further characterized by the instructions, when executed, being further operable to create call log reports from the tracked messages.

Optionally, the machine-readable medium with instructions stored thereon, is further characterized by the networked computerized system residing between a computer data network and a cellular data network.

Optionally, the machine-readable medium with instructions stored thereon, is further characterized by the networked computer marking data that has been monitored via the filter rules in the networked computer to indicate monitoring.

Optionally, the machine-readable medium with instructions stored thereon, is further characterized by the cellular data traffic comprising multiple data streams encoded via multiple cellular data protocols.

Optionally, the machine-readable medium with instructions stored thereon, is further characterized by being operable to intercept cellular data; parse the intercepted data to a data structure that is non-protocol specific; and compare the intercepted data in the data structure against filter rules.

Optionally the cellular data comprises mobile equipment cell registration data that is restricted via filter rules to prevent network transmission of the location of cellular mobile equipment.

An eighth aspect of the technology described herein relates to a machine-readable medium with instructions stored thereon, the instructions when executed are operable to cause computerized cellular mobile equipment to: store one or more filter rules, each filter rule corresponding to an undesired data type; monitor cellular data traffic for data corresponding to one or more of the filter rules; and restrict processing of the cellular data traffic corresponding to the one or more filter rules.

Optionally, the monitoring and restricting occurs in an event monitor, the event monitor operable to limit the function of software executing on the cellular mobile equipment by use of the filter rules.

Optionally, limiting the function of software executing on the mobile equipment comprises limiting the ability of executing software to erase or modify data stored on the cellular mobile equipment.

Optionally, the filter rules comprise rules that can be configured by a user via operation of the cellular mobile equipment.

Optionally, the filter rules comprise rules that are distributed via a server.

Optionally, monitoring cellular data traffic comprises: intercepting cellular data; parsing the intercepted data to a data structure that is non-protocol specific; and comparing the intercepted data in the data structure against filter rules.

Optionally, restricting processing of data that corresponds to one or more filter rules comprises temporarily halting processing of the data and prompting a cellular system user to determine what action to take.

Optionally, restricting processing of data that corresponds to one or more filter rules comprises temporarily halting processing of the data and alerting a user.

Optionally, monitoring and restricting processing of data that corresponds to one or more filter rules occurs in an interface that resides between a subscriber identity module (SIM) and cellular mobile equipment.

Optionally, the one or more filter rules restrict modification of data contained in the subscriber identity module (SIM).

## Claims

1. A method of providing security to a subscriber's mobile cellular equipment (105) coupled to a cellular data network (102), the method comprising the steps of:
(a) defining filter rules (201) and
(b) monitoring cellular data traffic for data corresponding to one or more filter rules (202).

2. The method of claim 1 comprising the additional step of (c) restricting undesired data.

3. The method of claim 1 or 2, wherein the filter rules comprise rules configurable by a subscriber via operation of the subscriber's cellular mobile equipment.

4. The method of any of claims 1 to 3 wherein said filter rules are defined by at least one of the group comprising:
(i) mobile cellular equipment (105) users;
(ii) cellular service (102) providers;
(iii) an automated cellular data monitoring system;
(iv) a filter rule subscription service, and
(v) a filter rule distribution service.

5. The method of any of claims 1 to 4, wherein the monitoring and restricting occurs in an event monitor, the event monitor operable to limit the function of software executing on the cellular mobile equipment by use of the filter rules.

6. The method of any of claims 2 to 5 wherein step (c) of restricting undesired data comprises at least one of the group comprising:
(i) restricting transmission of undesired data (204) and
(ii) restricting processing of undesired data (205).

7. The method of any of claims 2 to 6 wherein the undesired data is selected from the group comprising duplicate data and malicious data.

8. The method of any of claims 1 to 7, wherein said filtering rules are implemented via at least one of the group comprising:
(i) state machines;
(ii) defined key fields corresponding to the fields in the cellular data, and
(iii) location specific restrictions on content or quantity of information.

9. The method of any of claims 1 to 8 wherein said filtering rules comprises at least one rule using location of the mobile cellular equipment (105) as a parameter.

10. The method of any of claims 1 to 9 wherein the filtering rules are applied within or between cellular data networks, mobile cellular equipment or external network equipment.

11. The method of any of claims 1 to 10, further comprising the step (d) of alerting the user.

12. The method of any of claims 1 to 11 further comprising the step of tracking messages delivered to the subscriber's mobile cellular equipment (105) for creating a report selected from the list of billing reports (303) and log reports (304).

13. The method of claim 1 comprising the additional step of forwarding the data.
